(19) Europäisches Patentamt
European Patent Office
Office européen des brevets

(11) EP 0 745 477 A1

# (12) EUROPÄISCHE PATENTANMELDUNG

(43) Veröffentlichungstag:
**04.12.1996 Patentblatt 1996/49**

(51) Int. Cl.[6]: **B32B 27/32**

(21) Anmeldenummer: **96108234.4**

(22) Anmeldetag: **23.05.1996**

(84) Benannte Vertragsstaaten:
**AT BE DE ES FR GB IT NL**

(30) Priorität: **31.05.1995 DE 19519260**
**27.12.1995 DE 19548792**

(71) Anmelder: **HOECHST AKTIENGESELLSCHAFT**
**65929 Frankfurt am Main (DE)**

(72) Erfinder:
- **Peiffer, Herbert, Dr.**
  **55126 Mainz (DE)**
- **Busch, Detlef, Dr.**
  **66740 Saarlouis (DE)**
- **Schuhmann, Detlef, Dr.**
  **66583 Spiesen-Elversberg (DE)**
- **Schlögl, Gunter, Dr.**
  **65779 Kelkheim (DE)**
- **Winter, Andreas, Dr.**
  **61479 Glashütten (DE)**
- **Dries, Andreas, Dr.**
  **55270 Schwabenheim (DE)**

## (54) Biaxial orientierte Polypropylenfolie mit verbessertem Migrationswiderstand

(57) Es wird eine biaxial orientierte Polypropylenfolie beschrieben. Die Basisschicht der Folie enthält mindestens 90 Gew.-% eines mittels Metallocen-Katalysator hergestellten Polypropylens. Dieses Polypropylen zeichnet sich durch eine mittlere isotaktische Blocklänge von größer 40, einen n-heptan löslichen Anteil von kleiner 1 % und durch ein Verhältnis von Gewichtsmittel $M_w$ zu Zahlenmittel $M_n$ von kleiner als 4 aus.

EP 0 745 477 A1

## Beschreibung

Die Erfindung betrifft eine biaxial orientierte, mindestens einschichtige Polypropylenfolie mit verbesserter Globalmigration, ein Verfahren zu ihrer Herstellung und ihre Verwendung.

Biaxial orientierte Polypropylenfolien haben aufgrund ihres hervorragenden anwendungs- und verarbeitungstechnischen Eigenschaften einen bedeutenden Platz in der Verpackungsindustrie, insbesondere bei der Verpackung von Lebens- und Genußmittel, eingenommen. In dieses Marktsegment fließt derzeit etwa ca. 70 % der produzierten Menge. Daneben gelangen BoPP-Folien in technischen Anwendungen. Hervorzuheben sind die Metallisierung, die Kaschierung und die Verwendung der Folie als Elektroisolation bei der Kondensatorherstellung.

Die anwendungsrelevanten Eigenschaften der BoPP-Folien werden hauptsächlich durch die biaxiale Orientierung bestimmt. BoPP-Folien haben hohe mechanische Festigkeiten, eine gute Barrierewirkung, eine gute Dimensionsstabilität in der Wärme, eine brilliante Optik und eine ausgezeichnete Planlage infolge eines hervorragenden Dickenprofils.

Neben den genannten vorteilhaften Eigenschaften muß beim Einsatz der Folien in der Lebens- und Genußmittelindustrie gewährleistet/sichergestellt sein, daß von den Folien entsprechend der Bedarfsgegenständeverordnung (BGV) vom 10. April 1992 oder der EG-Richtlinie 90/128/EC-Directive, die mit der BGV vom 10. April 1992 in Deutsches Recht umgesetzt wurde, eine Globalmigration von 10 $mg/dm^2$ Folie nicht überschritten wird.

Die Globalmigration der Folien wird dabei in Kontakt mit verschiedenen Stoffen gemessen. Diese sind destilliertes Wasser, 3 %ige Essigsäure, 15 %iger Ethylalkohol und rektifiziertes Olivenöl. Bei Foliendicken unterhalb von 100 $\mu m$ ist der Kontakt der Folie zum Extraktionsmittel einseitig, bei Foliendicken darüber hinaus wird im beidseitigen Kontakt gemessen. Die Grundbedingungen für die Durchführung der Messungen sind 10 Tage bei einer Temperatur von 40°C. Die Messungen der Migrationswerte erfolgt in Anlehnung an DIN EN V 1186-2 und DIN EN V 1186-2.

Gut migrierfähige Substanzen im Polypropylen sind z.B. niedrig molekulare, nicht oder niedrigkristallines Polypropylen oder andere niedrigmolukare Substanzen wie Wachse, Additive wie Stabilisatoren, innere und äußere Gleitmittel, Antistatika und anorganisches und organische Partikel.

Die Migration gegenüber den drei erstgenannten Extraktionsmittel (destilliertes Wasser, Essigsäure oder Alkohol) ist meistens von geringfügiger Bedeutung. Problematisch kann die Migration gegenüber Fett oder (was gleichbedeutend ist) gegenüber rektifiziertem Olivenöl sein. Das Öl oder das Fett dringt in das Polypropylen ein (vornehmlich in die amorphen Bereiche), öffnet diese Bereiche, löst die entsprechenden migrierfähigen Substanzen und extrahiert diese heraus.

Da es sich bei der Migration um die Bestimmung absoluter Werte handelt, ist neben dem Gehalt an migrierfähigen Substanzen natürlich auch die Foliendicke von Bedeutung. Die Menge an migrierfähigen Substanzen wächst proportional mit der Foliendicke.

Nach dem Stand der Technik ist es bekannt, daß insbesondere Wachse problematisch sind und zur Migration in Öl oder Fett neigen. Migrationsmessungen zeigen, daß in der Regel bei den genannten Prüfbedingungen das gesamte in der Folie enthaltene Wachs vollständig in das Prüfmittel migriert, wodurch nur bestimmte Wachskonzentrationen zulässig sind.

In EP 0627 305 ist eine kohlenwasserstoffhaltige Polypropylen-Mehrschichtfolie beschrieben, die ein gegenüber dem Stand der Technik verbessertes Migrationsverhalten aufweist. Dies wird dadurch erzielt, daß das mit dem Polypropylen verträgliche Harz ein mittlere Molekulargewicht größer 1500 g/mol aufweist.

In (Wolff 5-Schicht Patent) wird ebenfalls eine kohlenwasserstoffhaltige Polypropylen-Mehrschichtfolie beschrieben, die ein verbessertes Migrationsverhalten und eine verbesserte Wassedampfbarriere aufweist. Die verbesserte Migration wird in dieser Anmeldung dadurch erzielt, daß die Folie 5-schichtig aufgebaut ist, wobei die Basisschicht aus Polypropylen und Kohlenwasserstoffharz besteht, die beiden Zwischenschichten ein hochisotakticheș Polypropylen enthalten und die Deckschichten z.B. Siegelschichten sein können. Die Zwischenschichten aus hochisotaktischem Polypropylen dienen als Sperrschicht gegenüber Migration der Kohlenwassestoffharze in das Extraktionsmittel, insbesonder in Fette oder rektifizierte Öle.

Bezüglich der Migration, vor allem der Migration in Ölen oder Fetten sind die Polypropylenfolien verbesserungsbedürftig.

Die Aufgabe der vorliegenden Erfindung bestand darin, eine biaxial orientierte Polypropylenfolie zur Verfügung zu stellen, die sich durch verbesserte Migrationswerte, insbesondere gegenüber Fette und rektifizierte Öle auszeichnet. Die Folie muß lauf-und verfahrenssicher bei Produktionsgeschwindigkeiten von bis zu 400 m/min herstellbar sein. Andere physikalische Folieneigenschaften, die im Hinblick auf deren Verwendung als Verpackungsfolie und/oder als Kaschierfolie gefordert sind, dürfen nicht nachteilig beeinflußt werden. Die Folie soll einen hohen Glanz, keine optischen Defekte in Form von Stippen oder Blasen, eine gute Kratzfestigkeit, auch bei einer niedrigen Foliendicke einen störungsfreien Lauf auf schnellaufenden Verpackungsmaschinen und im Falle transparenter Folientypen eine niedrige Folientrübung aufweisen.

Diese Aufgabe wird erfindungsgemäß durch eine biaxial orientierte Polypropylenfolie mit mindestens einer Basisschicht welche Polypropylen enthält gelöst, wobei in der Basisschicht ein Polypropylen eingesetzt wird dessen kennzeichnende Merkmale darin bestehen, daß

- die mittlere isotaktische Blocklänge des Polypropylenmoleküls zwischen zwei Kettenbaufehlern im statistischen Mittel größer 40 ist
- der n-heptanunlösliche Anteil des Polypropylens einen Kettenisotaxie-Index, gemessen mittels $^{13}C$-NMR-Spektroskopie, von mindestens 95 % aufweist,
- das Verhältnis von Gewichtsmittel $M_w$ zu Zahlenmittel $M_n$ der Molekulargewichtsverteilung kleiner als 4 ist, und
- der n-heptanlösliche Anteil des Polypropylens kleiner als 1% ist und
- die Globalmigration der Folie gemessen nach DIN EN V 1186-3 kleiner als 5 ist.

Die Unteransprüche geben bevorzugte Ausführungsformen der Erfindung an, welche nachstehend zusätzlich erläutert werden.

Erfindungsgemäß kann die Folie mehrschichtig oder auch einschichtig sein und besteht dann nur aus der im folgenden beschriebenen Basisschicht. Die Basisschicht ist im Sinne der vorliegenden Erfindung diejenige Schicht, welche die größte Schichtdicke von allen vorhandenen Schichten aufweist. Im allgemeinen macht die Basisschicht bei mehrschichtigen Ausführungsformen mindestens 40 %, vorzugsweise 50 bis 98 %, der Gesamtfoliendicke aus. In der mehrschichtigen Ausführungsform weist die Folie auf ihrer Basisschicht mindestens eine, gegebenenfalls beidseitig Deckschicht/en auf, welche die äußeren Schichten der Folie bilden. In einer weiteren mehrschichtigen Ausführungsform weist die Folie auf ihrer Basisschicht mindestens eine, gegebenenfalls beidseitig Zwischenschicht/en auf.

Die Basisschicht der Folie enthält im allgemeinen mindestens 85-100 Gew.-%, vorzugsweise 90-99 Gew.-%, insbesondere 90-95 Gew.-%, jeweils bezogen auf die Basissicht eines nachstehend beschriebenen Propylenpolymeren, welches sich strukturell wesentlich von den herkömmlichen isotaktischen Propylenhomopolymeren, die üblicherweise in der Basisschicht von boPP-Folien eingesetzt werden, unterscheidet. Diese Strukturunterschiede können durch die Herstellung der Propylenpolymeren mittels neuartiger Metallocen-Katalysatoren erzielt werden.

Ein Merkmal dieses Strukturunterschiedes ist eine mittlere isotaktische Blocklänge des Propylenpolymeren zwischen zwei Kettenbaufehlern von mindestens 40, vorzugsweise mindestens 60 und insbesondere mindestens 70 Propyleneinheiten.

Das erfindungsgemäß eingesetzte Polypropylen kann zusätzlich über weitere Parameter charakterisiert werden, die mit der besonderen Struktur des Polymeren verknüpft sind.

Neben einer definierten mittleren isotaktischen Blocklänge zeichnet sich das Polypropylen durch einen besonders niedrigen n-heptanlöslichen Anteil aus, der im allgemeinen kleiner als 1,0 Gew.-%, vorzugsweise > 0 bis 0,6 Gew.-% ist und insbesondere im Bereich von 0,5 bis 0,005 Gew.-% liegt, jeweils bezogen auf das Gewicht des Ausgangspolymeren.

Der n-heptanunlösliche Anteil des Propylenpolymeren ist im allgemeinen hochisotaktisch. Der mittels $^{13}C$-NMR-Spektroskopie bestimmte Kettenisotaxie-Index des n-heptanunlöslichen Anteils beträgt mindestens 95 %, vorzugsweise mindestens 96 % und insbesondere mindestens 97 bis 99 %.

Die Molekulargewichtsverteilung ist ein weiterer geeigneter Parameter zur Charakterisierung der Polymerstruktur. Sie ist vorteilhafterweise vergleichsweise eng. Das Verhältnis des Gewichtsmittels $M_w$ zum Zahlenmittel $M_n$ beträgt bevorzugt weniger als 4, vorzugsweise weniger als 3. Es liegt insbesondere im Bereich von 1,5 bis 2,7.

Es war völlig überraschend, daß sich diese neuartigen Polypropylene trotz des ausgesprochen niedrigen n-heptanlöslichen Anteiles, des hohen Kettenisotaxie-Index und der sehr engen Molekulargewichtsverteilung zu biaxial orientierten Polypropylenfolien verstrecken lassen. Weiterhin war es sehr überraschend, daß die aus dem neuartigen Polymeren hergestellten Folien deutlich verbesserte Migrationseigenschaften aufzeigen.

Das Propylenpolymer der vorstehend beschriebenen Struktur enthält im allgemeinen mindestens 90 Gew.-%, vorzugweise 94 bis 100 Gew.-%, insbesondere 98 bis 100 Gew.-%, Propyleneinheiten. Der entsprechende Comonomergehalt von höchstens 10 Gew.-% bzw. 0 bis 6 Gew.-% bzw. 0 bis 2 Gew.-% besteht, wenn vorhanden, im allgemeinen aus Ethylen. Die Angaben in Gew.-% beziehen sich jeweils auf das Propylenpolymere. Der Schmelzpunkt liegt im allgemeinen im Bereich von 140 bis 175°C, vorzugsweise von 150 bis 165°C und insbesondere von 155 bis 162°C und der Schmelzflußindex (Messung DIN 53 735 bei 21,6 N Belastung und 230°C) beträgt 1,0 bis 30 g/10 min, vorzugsweise von 1,5 bis 20 g/10 min und insbesondere 2,0 bis 16 g/10 min.

Die vorstehend beschrieben Polypropylene können vorteilhaft durch an sich bekannte Verfahren hergestellt werden, bei denen Metallocenkatalysatoren eingesetzt werden. Die Herstellung dieser Polypropylene ist nicht Gegenstand der vorliegenden Erfindung. Die entsprechenden Verfahren sind bereits in EP-A-0 302 424, EP-A-0 336 128 und EP-A-0 336 127 und EP-A-0 576 970 beschrieben, auf die hier ausdrücklich Bezug genommen wird.

Es hat sich gezeigt, daß die Strukturunterschiede des Polypropylens, die durch dessen Herstellung mittels Metallocenkatalysator bedingt sind, günstig für die Migratonswerte der daraus hergestellten Folie sind. Die Globalmigration ist bei Folien mit einer Basisschicht aus Metallocen-PP gegenüber Folien aus Standard-PP deutlich niedriger.

Die herkömmlichen Ziegler-Natta-Katalysatoren weisen mehrere unterschiedliche polymerisationsaktive Zentren auf, von denen jedes ein andersartiges Polymeres herstellt. Dies führt zu Ketten mit stark unterschiedlichen Molmassen. Es werden praktisch sowohl wachsartige Polymere mit Kettenlängen von $M_n$ kleiner als 10 000 als auch ultrahochmolekulare Polymere mit einem $M_n$ von größer als 1 000 000 erhalten. Gleichzeitig sind die aktiven Zentren

unterschiedlich in ihrer Stereospezifität. Das Spektrum reicht von völlig unspezifischen Zentren über syndiospezifische Zentren zu isospezifischen Zentren, wobei letztere wiederum eine unterschiedliche Isospezifität aufweisen. Dies führt zu einem Produktgemisch aus ataktischem Polypropylen, syndiotaktischem Polypropylen und isotaktischem Polypropylen mit unterschiedlicher Kristallinität, d.h., mit unterschiedlichen Schmelzpunkten. Syndiotaktisches Polypropylen führt zu Verzug in der Folie, ataktisches Polypropylen zu Ausdünstungen (Migration) und zur Reduzierung der Folienhärte und das isotaktisches Polypropylen ist ein Material mit unterschiedlichen Schmelzpunkten, also kein einheitliches Produkt.

Kleine Schwankungen in den Polymerisationsbedingungen führen zu Schwankungen in der Zusammensetzung der drei charakteristischen Kettentypen, d.h. wiederum zu einem unterschiedlichen, nicht eindeutig zu charakterisierenden Produkt.

Die Metallocen-Katalysatoren haben dagegen ein eindeutig zu charakterisierendes Polymerisationszentrum, das auf den jeweiligen wünschenswerten Polymertypen durch Variation der Metallocen-Ligand-Sphäre maßgeschneidert werden kann. Die Verteilung der Kettenlänge ist einheitlich. Das $M_w/M_n$ ist klein und liegt zwischen 1,7 und 4,0, vorzugsweise zwischen 1,8 und 3,0 und ganz insbesondere zwischen 2,0 und 2,7 (Schultz-Florey-Verteilung). Gleichfalls weisen die aktiven Zentren auch eine einheitliche Stereospezifität auf, was zu Ketten mit einem einheitlichen Schmelzpunkt, bzw. Ketten mit einheitlichem stereospezifischem Aufbau führt. Es werden somit Polymerketten gebildet, die sich in ihren mittleren isotaktischen Blocklängen nur geringfügig unterscheiden. Dies spiegelt sich auch in einem einheitlichen Schmelzpunkt wieder.

Die Basisschicht der erfindungsgemäßen Folie kann gegebenenfalls zusätzlich zu dem vorstehend beschriebenen Metallocen-Propylenpolymeren übliche Additive in jeweils wirksamen Mengen enthalten. Übliche Additive sind Antiblockmittel, Neutralisationsmittel, Stabilisatoren, Antistatika und/oder Gleitmittel.

Bevorzugte Antistatika sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit $\omega$-Hydroxy-($C_1$-$C_4$)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,5 Gew.-%. Des weiteren ist Glycerinmonostearat geeignet und wird in einer Menge von 0,03 % bis 0,5 % als Antistatikum eingesetzt.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Benzoguanaminformaldehyd-Polymere, Siliciumdioxid und Calciumcarbonat. Die wirksame Menge an Antiblockmittel liegt im Bereich von 0,1 bis 2 Gew.-%, vorzugsweise 0,1 bis 0,8 Gew.-%. Die mittlere Teilchengröße liegt zwischen 1 und 6 $\mu$m, insbesondere 2 und 5 $\mu$m, wobei Teilchen mit einer kugelförmigen Gestalt, wie in der EP-A-0 236 945 und der DE-A-38 01 535 beschrieben, besonders geeignet sind.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,01 bis 3 Gew.-%, vorzugsweise 0,02 bis 1 Gew.-%. Besonders geeignet ist der Zusatz von höheren aliphatischen Säureamiden im Bereich von 0,01 bis 0,25 Gew.-% in der Basisschicht. Ein insbesondere geeignetes aliphatisches Säureamid ist Erucasäureamid. Der Zusatz von Polydimethylsiloxanen ist im Bereich von 0,02 bis 2,0 Gew.-% bevorzugt, insbesondere Polydimethylsiloxane mit einer Viskosität von 5 000 bis 1 000 000 $mm^2/s$.

Als Stabilisatoren können die üblichen stabilisierend wirkenden Verbindungen für Ethylen-, Propylen- und andere $\alpha$-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxy-phenyl)-Propionat oder 1,3,5-Trimethyl-2,4,6-tris(3,5-di-Tertiärbutyl-4-Hydroxybenzyl)benzol sind besonders vorteilhaft.

Neutralisationsmittel sind vorzugsweise Dihydrotalcit, Calciumstearat und/oder Calciumcarbonat einer mittleren Teilchengröße von höchstens 0,7 $\mu$m, einer absoluten Teilchengröße von kleiner 10 $\mu$m und einer spezifischen Oberfläche von mindestens 40 $m^2/g$.

Die erfindungsgemäße Polypropylenfolie umfaßt in einer bevorzugten mehrschichtigen Ausführungsform mindestens eine, gegebenenfalls beidseitig Deckschicht/en aus Polymeren aus -Olefinen mit 2 bis 10 Kohlenstoffatomen. Im allgemeinen enthält die Deckschicht mindestens 70 Gew.-%, vorzugsweise 80 bis 100 Gew.-%, insbesondere 90 bis 98 Gew.-%, der -olefinischen Polymeren, jeweils bezogen auf das Gewicht der Deckschicht und gegebenfalls Additive in jeweils wirksamen Mengen.

Beispiele für derartige -olefinische Polymere sind

ein Propylenhomopolymer oder
ein Copolymer von

Ethylen und Propylen oder
Ethylen und Butylen-1 oder
Propylen und Butylen-1 oder

ein Terpolymer von

Ethylen und Propylen und Butylen-1 oder

eine Mischung aus zwei oder mehreren der genannten Homo-, Co- und Terpolymeren oder
ein Blend aus zwei oder mehreren der genannten Homo-, Co- und Terpolymeren, gegebenenfalls gemischt mit einem oder mehreren der genannten Homo-, Co- und Terpolymeren

wobei insbesondere Propylenhomopolymer oder

statistische Ethylen-Propylen-Copolymere mit

einem Ethylengehalt von 1 bis 10 Gew.-%, bevorzugt 2,5 bis 8 Gew.-%, oder

statistische Propylen-Butylen-1-Copolymere mit

einem Butylengehalt von 2 bis 25 Gew.-%, bevorzugt 4 bis 20 Gew.-%,

jeweils bezogen auf das Gesamtgewicht des Copolymeren, oder statistische Ethylen-Propylen-Butylen-1-Terpolymere mit

einem Ethylengehalt von 1 bis 10 Gew.-%, bevorzugt 2 bis 6 Gew.-%, und
einem Butylen-1-Gehalt von 2 bis 20 Gew.-%, bevorzugt 4 bis 20 Gew.-%,

jeweils bezogen auf das Gesamtgewicht des Terpolymeren, oder ein Blend aus einem Ethylen-Propylen-Butylen-1-Terpolymeren und einem Propylen-Butylen-1-Copolymeren

mit einem Ethylengehalt von 0,1 bis 7 Gew.-%
und einem Propylengehalt von 50 bis 90 Gew.-%
und einem Butylen-1-Gehalt von 10 bis 40 Gew.-%,

jeweils bezogen auf das Gesamtgewicht des Polymerblends, bevorzugt sind.

Das in der Deckschicht eingesetzte Propylenhomopolymere besitzt einen Schmelzpunkt von 140°C oder höher, vorzugsweise 150 bis 165°C. Isotaktisches Homopolypropylen mit einem n-heptanlöslichen Anteil von 6 Gew.-% und weniger, bezogen auf das isotaktische Homopolypropylen, ist bevorzugt. Das Homopolymere hat im allgemeinen einen Schmelzflußindex von 1,0 g/10 min bis 20 g/10 min.

Die in der Deckschicht bevorzugt eingesetzten vorstehend beschriebenen Co- und Terpolymeren weisen im allgemeinen einen Schmelzflußindex von 1,5 bis 30 g/10 min auf. Der Schmelzpunkt liegt vorzugsweise im Bereich von 120 bis 140°C. Das vorstehend beschriebene Blend aus Co- und Terpolymeren hat einen Schmelzflußindex von 5 bis 9 g/10 min und einen Schmelzpunkt von 120 bis 150°C. Alle vorstehend angegebenen Schmelzflußindices werden bei 230°C und einer Kraft von 21,6 N (DIN 53 735) gemessen.

In einer matten Ausführungsform enthält die Deckschicht zusätzlich ein High Density Polyethylen (HDPE), welches mit den vorstehend beschriebenen Deckschichtpolymeren gemischt oder geblendet wird. Die Zusammensetzung und Einzelheiten der matten Deckschichten sind beispielsweise in der EP 0 563 796 oder EP 0 622 185beschrieben, auf die hier ausdrücklich Bezug genommen wird.

Die Deckschicht/en kann/können auch das vorstehend für die Basisschicht beschriebene Metallocen-katalysierte-Propylenpolymere enthalten.

Gegebenenfalls können der/den Deckschicht/en die vorstehend für die Basisschicht beschriebenen Additive wie Antistatika, Antiblockmittel, Gleitmittel, Neutralisationsmittel und Stabilisatoren zugesetzt werden. Die Mengenangaben in diesen vorstehenden Ausführungen beziehen sich auf das entsprechende Gewicht der Deckschicht. In einer bevorzugten Ausführungsform enthält/enthalten die Deckschicht/en eine Kombination von Antiblockmittel, vorzugsweise $SiO_2$, und Gleitmittel, vorzugsweise Polydimethylsiloxan.

Die erfindungsgemäße Folie umfaßt mindestens die vorstehend beschriebene Basisschicht, vorzugsweise mindestens eine Deckschicht. Je nach ihrem vorgesehenen Verwendungszweck kann die Folie eine weitere Deckschicht auf

der gegenüberliegenden Seite aufweisen. Gegebenenfalls kann/können auch einseitig eine oder beidseitig Zwischenschicht/en zwischen der Basis- und der/den Deckschicht/en aufgebracht werden.

Bevorzugte Ausführungsformen der erfindungsgemäßen Polypropylenfolie sind dreischichtig. Aufbau, Dicke und Zusammensetzung einer zweiten Deckschicht können unabhängig von der bereits vorhandenen Deckschicht gewählt werden, wobei die zweite Deckschicht ebenfalls eine der vorstehend beschriebenen Polymeren oder Polymermischungen enthalten kann, welche aber nicht mit der der ersten Deckschicht identisch sein muß. Die zweite Deckschicht kann jedoch auch andere gängige Deckschichtpolymere enthalten.

Die Dicke der Deckschicht/en ist im allgemeinen größer als 0,1 μm und liegt vorzugsweise im Bereich von 0,1 bis 10 μm, vorzugsweise im Bereich von 0,3 bis 3 μm, insbesondere im Bereich von 0,4 bis 1,5 μm, wobei beidseitige Deckschichten gleich oder verschieden dick sein können.

Die Zwischenschicht/en kann/können aus den für die Deckschichten beschriebenen $\alpha$-olefinischen Polymeren bestehen. In einer bevorzugten Ausführungsform besteht/bestehen die Zwischenschicht/en aus dem für die Basisschicht beschriebenen Propylenpolymeren. Die Zwischenschicht/en kann/können die für die einzelnen Schichten beschriebenen üblichen Additive enthalten. Die Dicke der Zwischenschicht/en ist im allgemeinen größer als 0,3 μm und liegt vorzugsweise im Bereich von 1,0 bis 15 μm, insbesondere 1,5-10 μm.

Die Gesamtdicke der erfindungsgemäßen Polypropylenfolie kann innerhalb weiter Grenzen variieren und richtet sich nach dem beabsichtigten Einsatz. Sie beträgt vorzugsweise 4 bis 100 μm, insbesondere 5-60 μm, vorzugweise 6-30 μm, wobei die Basisschicht etwa 40 bis 100 % der Gesamtfoliendicke ausmacht.

Die Erfindung betrifft weiterhin ein Verfahren zur Herstellung der erfindungsgemäßen Polypropylenfolie nach dem an sich bekannten Coextrusionsverfahren.

Im Rahmen dieses Verfahrens wird so vorgegangen, daß die Schicht oder die den einzelnen Schichten der Folie entsprechende/n Schmelze/n durch eine Flachdüse coextrudiert wird/werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht corona- oder flammbehandelt wird.

Die biaxiale Streckung (Orientierung) wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist.

Zunächst wird wie beim Coextrusionsverfahren üblich das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Die so erhaltene Folie wird dann längs und quer zur Extrusionsrichtung gestreckt, was zu einer Orientierung der Molekülketten führt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens. Die Längsstreckungsverhältnisse liegen im Bereich von 3 bis 9, vorzugsweise 4,5 - 8,5. Die Querstreckverhältnisse liegen im Bereich von 4 bis 12, vorzugsweise 5-11, insbesondere 7 bis 10.

An die biaxiale Streckung der Folie schließt sich ihre Thermofixierung (Wärmebehandlung) an, wobei die Folie etwa 0,1 bis 10 s lang bei einer Temperatur von 100 bis 160°C gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie abgekühlt und verfestigt wird, durch einen Heiz- und Kühlkreislauf bei einer Temperatur von 10 bis 100°C, vorzugsweise 20-70°C zu halten.

Die Temperaturen, bei denen Längs- und Querstreckung durchgeführt werden, können in einem relativ großen Bereich variieren und richten sich nach den gewünschten Eigenschaften der Folie. Im allgemeinen wird die Längsstrekkung vorzugsweise bei 80 bis 170°C, vorzugsweise 80-150°C und die Querstreckung vorzugsweise bei 100 bis 200°C, vorzugsweise 120-170°C durchgeführt.

Bevorzugt wird/werden nach der biaxialen Streckung eine oder beide Oberfläche/n der Folie nach einer der bekannten Methoden corona- oder flammbehandelt. Die Behandlungsintensität liegt im allgemeinen im Bereich von 37 bis 50 mN/m, vorzugsweise 39 bis 45 mN/m.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 5 bis 20 kV und 5 bis 30 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Für eine Flammbehandlung mit polarisierter Flamme (vgl. US-A-4,622,237) wird eine elektrische Gleichspannung zwischen einem Brenner (negativer Pol) und einer Kühlwalze angelegt. Die Höhe der angelegten Spannung beträgt

zwischen 400 und 3 000 V, vorzugsweise liegt sie im Bereich von 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten.

Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Die erfindungsgemäße Folie ist gegenüber Folien nach dem Stand der Technik in ihrem Migrationswerten deutlich verbessert.

Zur Charakterisierung der Rohstoffe und der Folien wurden die folgenden Meßmethoden benutzt:

Schmelzflußindex

Der Schmelzflußindex wurde nach DIN 53 735 bei 21,6 N Belastung und 230°C gemessen.

Schmelzpunkt

DSC-Messung, Maximum der Schmelzkurve, Aufheizgeschwindigkeit 20°C/min.

Wasserdampf- und Sauerstoffdurchlässigkeit

Die Wasserdampfdurchlässigkeit wird gemäß DIN 53 122 Teil 2 bestimmt. Die Bestimmung der Sauerstoffbarrierewirkung erfolgt gemäß Entwurf DIN 53 380 Teil 3 bei einer Luftfeuchte von 53 %.

Trübung

Die Trübung der Folie wurde nach ASTM-D 1003-52 gemessen.

Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 60 oder 85 eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

Oberflächenspannung

Die Oberflächenspannung wurde mittels der sogenannten Tintenmethode (DIN 53 364) bestimmt.

Bedruckbarkeit

Die coronabehandelten Folien wurden 14 Tage nach ihrer Produktion (Kurzzeitbeurteilung) bzw. 6 Monate nach ihrer Produktion (Langzeitbeurteilung) bedruckt. Die Farbhaftung wurde mittels Klebebandtest beurteilt. Konnte mittels Klebeband wenig Farbe abgelöst werden, so wurde die Farbhaftung mit mäßig und bei deutlicher Farbablösung mit schlecht beurteilt.

Reißfestigkeit, Reißdehnung

Die Reißfestigkeit und die Reißdehnung werden nach DIN 53455 bestimmt.

E-Modul

Der E-Modul wird gemäß DIN 53 457 bzw. ASTM 882 bestimmt.

Bestimmung des Warmblockverhaltens

Zur Messung des Warmblockverhaltens werden zwei einseitig filzbeklebte Holzklötzchen mit den Abmessungen 72

mm x 41 mm x 13 mm in die zu vermessende Folie eingeschlagen und gesiegelt. Auf die mit den Filzauflagen zueinandergekehrten Holzklötzchen wird ein Gewicht von 200 g plaziert und dieser Aufbau in einen auf 70°C vortemperierten Wärmeofen gebracht und dort über 2 h belassen. Danach wird für 30 min auf Raumtemperatur (21°C) abgekühlt, das Gewicht von den Holzklötzchen heruntergenommen und das obere Klötzchen mittels einer mechanischen Apparatur vom unteren Klötzchen heruntergezogen. Die Auswertung erfolgt über 4 Einzelmessungen, über die dann eine maximale Abschubkraft (gemessen in N) festgestellt wird. Die Spezifikation ist erfüllt, wenn keine der Einzelmessungen über 5 N liegt.

Molekulargewichtsbestimmung

Das mittlere Molekulargewicht $M_w$ und $M_n$ (Gewichtsmittel $M_w$ und Zahlenmittel $M_n$) und die mittlere Molmassen-Dispersität wurden in Anlehnung an DIN 55 672, Teil 1, mittels Gelpermeationschromatographie bestimmt. Anstelle von THF wurde als Elutionsmittel Orthodichlorbenzol verwendet. Da die zu untersuchenden olefinischen Polymeren bei Raumtemperatur nicht löslich sind, wird die gesamte Messung bei erhöhter Temperatur (135°C) durchgeführt.

Migration

Die Migrationswerte gegenüber destilliertem Wasser, Essigsäure, Alkohol und rektifiziertem Olivenöl werden nach DIN EN V 1186-3 bestimmt.

Isotaktischer Anteil

Der isotaktische Anteil des Homopolymeren als auch der isotaktische Anteil der Folie können in Näherung durch die unlösliche Fraktion des Rohstoffes bzw. der Folie in einem geeigneten Lösungsmittel charakterisiert werden. Es hat sich als zweckmäßig erwiesen n-Heptan zu verwenden. Üblicherweise führt man eine Soxhlet-Extraktion mit siedendem n-Heptan durch. Zur Erzielung einer guten Reproduzierbarkeit ist es zweckmäßig, das Soxhlet anstelle von Granulat mit einem Preßling zu befüllen. Die Dicke des Preßlings sollte hierbei 500 Mikrometer nicht übersteigen. Für die quantitative Erfassung des ataktischen Anteils des Polymeren ist es von entscheidender Bedeutung, eine ausreichende Extraktionszeit sicherzustellen. In der Regel liegt die Extraktionszeit im Bereich von 8 bis 24 Stunden.

Die operationelle Definition des isotaktischen Anteils $PP_{iso}$ in Prozent ist gegeben durch das Verhältnis der Gewichte der getrockneten n-heptanunlöslichen Fraktion zur Einwaage:

$$PP_{iso} = 100x \text{ (n-heptanunlösliche Fraktion/Einwaage)}$$

Eine Analyse des getrockneten n-Heptan-Extraktes zeigt, daß dieser in der Regel nicht aus reinem ataktischen Propylenpolymeren besteht. Bei der Extraktion werden auch aliphatische und olefinische Oligomere, insbesondere isotaktische Oligomere sowie auch mögliche Zusatzstoffe wie z.B. hydrierte Kohlenwasserstoffharze, miterfaßt.

Kettenisotaxie-Index

Der oben definierte isotaktische Anteil PPiso ist für die Charakterisierung der Kettenisotaxie der Polymeren nicht ausreichend. Es erweist sich als sinnvoll, den Kettenisotaxie-Index II des Propylenpolymeren mittels hochauflösender $^{13}$C-NMR-Spektroskopie zu bestimmen, wobei als NMR-Probe nicht der Originalrohstoff, sondern dessen n-heptanunlösliche Fraktion zu wählen ist. Zur Charakterisierung der Isotaxie von Polymerketten benutzt man in der Praxis meist den 13C-NMR-spektroskopischen Triaden-Isotaxie-Index II (Triaden).

Bestimmung des triadenbezogenen Kettenisotaxie-Index II (Triaden) Die Bestimmung des Kettenisotaxie-Index II (Triaden) des n-heptanunlöslichen Anteils des Polymeren sowie der Folie wird aus dessen bzw. deren $^{13}$CNMR-Spektrum bestimmt. Man vergleicht die Intensitäten von Triaden-Signalen, welche aus den Methylgruppen mit unterschiedlichen lokalen Umgebungen resultieren.

Hinsichtlich der Auswertung des $^{13}$C-NMR-Spektrums sind zwei Fälle zu unterscheiden:

A) Der untersuchte Rohstoff ist ein reines Propylenhomopolymer ohne statistischen $C_2$-Gehalt.

B) Der untersuchte Rohstoff ist ein Propylenpolymer mit einem geringen statistischen $C_2$-Gehalt, im folgenden $C_2$-$C_3$-Copolymer genannt.

Fall A:

Der Kettenisotaxie-Index des Homopolymeren wird aus dessen $^{13}$C-NMR-Spektrum bestimmt. Man vergleicht die Intensitäten von Signalen, welche aus den Methylgruppen mit unterschiedlicher Umgebung resultieren. Im $^{13}$C-NMR-

Spektrum eines Homopolymeren treten im wesentlichen drei Gruppen von Signalen, sogenannte Triaden, auf.

1. Bei einer chemischen Verschiebung von etwa 21 bis 22 ppm tritt die "mm-Triade" auf, welche den Methylgruppen mit links und rechts unmittelbar benachbarten Methylgruppen zugeordnet wird.

2. Bei einer chemischen Verschiebung von etwa 20,2 bis 21 ppm tritt die "mr-Triade" auf, welche den Methylgruppen mit links oder rechts unmittelbar benachbarten Methylgruppen zugeordnet wird.

3. Bei einer chemischen Verschiebung von etwa 19,3 bis 20 ppm tritt die "rr-Triade" auf, welche den Methylgruppen ohne unmittelbar benachbarte Methylgruppen zugeordnet wird.

Die Intensitäten der zugeordneten Signalgruppen werden als Integral der Signale bestimmt. Der Kettenisotaxie-Index ist wie folgt definiert:

$$\text{II Triaden} = \frac{J_{mm} + 0{,}5\, J_{mr}}{J_{mm} + J_{mr} + J_{rr}} \cdot 100$$

worin $J_{mm}$, $J_{mr}$ und $J_{rr}$ die Integrale der zugeordneten Signalgruppen bedeuten.

Fall B:

Abb. 1 ist eine schematisch vergrößerte Darstellung eines $^{13}$C-NMR Spektrums von einem Ethylen-Propylen-Copolymeren. Die chemische Verschiebung der interessierenden Methylgruppen liegt im Bereich 19 bis 22 ppm. Wie in Abb. 1 ersichtlich kann das Spektrum der Methylgruppen in drei Blöcke unterteilt werden. In diesen Blöcken erscheinen die $CH_3$-Gruppen in triadischen Sequenzen, deren Zuordnung zu den lokalen Umgebungen im folgenden näher erläutert wird:

Block 1:

$CH_3$-Gruppen in der PPP-Sequenz (mm-Triade)

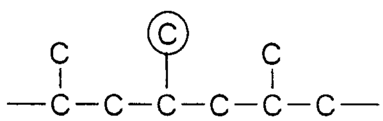

Block 2:

$CH_3$-Gruppen in der PPP-Sequenz (mr- oder rm-Triaden)

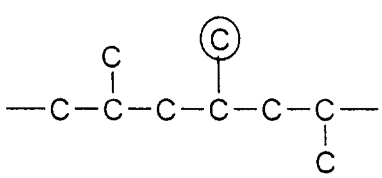

und $CH_3$-Gruppen in der EPP-Sequenz (m-Kette):

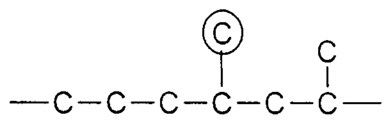

Block 3:

$CH_3$-Gruppen in der PPP-Sequenz (rr-Triaden):

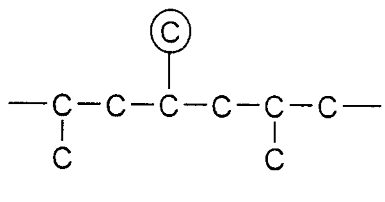

$CH_3$-Gruppen in einer EPP-Sequenz (r-Kette):

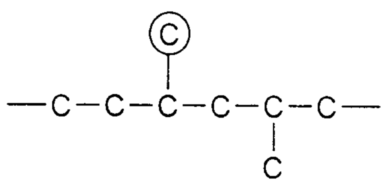

$CH_3$-Gruppen in einer EPE-Sequenz:

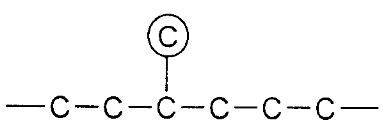

Bei der Bestimmung des triadenbezogenen Kettenisotaxie-Index II (Triaden) des n-heptanunlöslichen Anteils eines Ethylen-Propylen-Copolymers werden nur PPPTriaden in Betracht gezogen, d.h. nur solche Propylen-Einheiten, die zwischen zwei benachbarten Propylen-Einheiten liegen (siehe auch EP-B-0 115 940, Seite 3, Zeilen 48 und 49).

Die Definition des Triaden-Isotaxie-Index eines Ethylen-Propylen-Copolymeren lautet:

$$II\ (Triaden) = 100x(J_{mm}/J_{ppp})$$

Berechnung des Kettenisotaxie-Index eines Ethylen-Propylen-Copolymers:

1. $J_{mm}$ ist gegeben durch das Peakintegral von Block 1.

2. Berechne das Integral ($J_{gesamt}$) aller Methylgruppenpeaks in den Blöcken 1, 2 und 3.

3. Durch einfache Betrachtungen läßt sich zeigen, daß

$$J_{ppp}=J_{gesamt}-J_{EPP}-J_{EPE}.$$

Probenvorbereitung und Messung:

60 bis 100 mg Polypropylen werden in 10 mm-NMR-Röhrchen eingewogen und Hexachlorbutadien und Tetrachlorethan in einem Mischungsverhältnis von etwa 1,5:1 zugegeben, bis eine Füllhöhe von ca. 45 mm erreicht ist. Die Suspension wird so lange (in der Regel ca. eine Stunde) bei ca. 140°C aufbewahrt, bis eine homogene Lösung entstanden ist. Um den Lösevorgang zu beschleunigen, wird die Probe von Zeit zu Zeit mit einem Glasstab gerührt.

Die Aufnahme des $^{13}$C-NMR-Spektrums erfolgt bei erhöhter Temperatur (in der Regel 365 K) unter Standardmeßbedingungen (halbquantitativ).

Mittlere isotaktische Blocklänge $n_{iso}$

Die mittlere isotaktische Blocklänge $n_{iso}$ wird aus dem $^{13}$C-NMR-Spektrum gemäß der Formel

$$n_{iso} = 1 + 2\,J_{mm}/J_{mr}$$

bestimmt.

Herstellung der Propylenpolymeren

Die Propylenpolymeren wurden mit Hilfe von Metallocenkatalysatoren durch die im folgenden exemplarisch beschriebenen Polymerisationsreaktionen hergestellt:

Beispiel 1

Ein trockener 150 dm$^3$ großer Reaktor wurde mit Stickstoff gespült und bei 20°C mit 80 dm$^3$ eines Benzinschnittes mit dem Siedebereich 100 bis 120°C gefüllt. Dann wurde der Gasraum durch fünfmaliges Aufdrücken von Propylen, welches unter einem Druck von 2 bar steht, und Entspannen stickstofffrei gespült.

Nach Zugabe von 50 l flüssigem Propylen wurden 64 cm$^3$ toluolische Methylaluminoxlösung (entsprechend 100 m mol Al, Molmasse nach kryoskopischer Bestimmung 1000 g/mol) zugegeben und der Reaktorinhalt auf 50°C hochgeheizt. Durch Zudosierung von Wasserstoff wurde ein Wasserstoffgehalt im Gasraum des Reaktors von 1,2 % eingestellt und später dann durch Nachdosierung während der gesamten Polymerisationszeit konstant gehalten (Überprüfung online durch Gaschromatographie).

20 mg des Metallocens rac-Dimethylsilandiylbis (2-methyl-4,6-diisopropyl-1-indenyl) zirkondichlorid wurden in 16 ml toluolischer Methylaluminoxanlösung (entsprechend 25 m mol Al) gelöst und in den Reaktor gegeben.

Durch Kühlung wurde der Reaktor 10 h bei 50°C gehalten, dann wurde durch Zugabe von 50 Ndm$^3$ $CO_2$-Gas die Polymerisation gestoppt und das gebildete Polymer vom Suspensionsmedium abgetrennt und getrocknet.

Es wurden 21,9 kg Polymerpulver entsprechend einer Metallocenaktivität von 109,5 kg PP/ g Metallocen * h erhalten. Das Polymere ist durch folgende weitere Daten gekennzeichnet:

| | |
|---|---|
| Viskositätszahl VZ: | 228 cm$^3$/g |
| mittlere Molmasse $M_w$: | 225 000 g/mol |
| $M_w/M_n$: | 2,5 |
| Schmelzpunkt $T_m$: | 150°C |
| Schmelzflußindex MFI: | 7,0 g/10 min |
| Mittlere isotaktische Blocklänge $n_{iso}$: | ca. 80 |
| Isotaxie-Index: | ca. 97,5 % |

Beispiel 2

Die Polymerisation von Beispiel 1 wurde wiederholt, verwendet wurde jedoch das Metallocen rac-Dimethylsilandiylbis (2-methyl-4,5-benzo-1-indenyl) zirkondichlorid. Die Polymerisationstemperatur betrug 60°C und es wurden 6,5 h polymerisiert. Die Metallocenaktivität betrug in diesem Fall 173 kg PP/g Metallocen *h. Das Polymere ist durch die weiteren Daten wie folgt gekennzeichnet:

| | |
|---|---|
| Viskositätszahl VZ: | 258 $cm^3/g$ |
| mittlere Molmasse $M_w$: | 302 000 g/mol |
| $M_w/M_n$: | 2,3 |
| Schmelzpunkt $T_m$: | 147°C |
| Schmelzflußindex MFI: | 4,3 g/10 min |
| Mittlere isotaktische Blocklänge $n_{iso}$: | ca. 80 |
| Isotaxie-Index: | ca. 97,5 % |

Beipiel 3

Die Polymerisation von Beispiel 1 wurde wiederholt, verwendet wurden jedoch 10 mg des Metallocen rac-Dimethylsilandiylbis (2-methyl-4-phenyl-1-indenyl) zirkondichlorid. Die Wasserstoffkonzentration im Gasraum des Reaktors war 1,8 Vol.-%. Die Metallocenaktivität betrug 227 kg PP/g Metallocen *h. Das Polymere ist durch die weiteren Daten wie folgt gekennzeichnet:

| | |
|---|---|
| Viskositätszahl VZ: | 230 $cm^3/g$ |
| mittlere Molmasse $M_w$: | 274 500 g/mol |
| $M_w/M_n$: | 2,0 |
| Schmelzpunkt $T_m$: | 160°C |
| Schmelzflußindex MFI: | 4,0 g/10 min |
| Mittlere isotaktische Blocklänge $n_{iso}$: | ca. 100 |
| Isotaxie-Index: | ca. 98 % |

Beispiel 4

Es wurde wie in Beispiel 1 verfahren, während der Polymerisation wurden jedoch zwei unterschiedliche Wasserstoffkonzentrationen verwendet. Zunächst wurde im Gasraum des Reaktors ein Wasserstoffgehalt von 10 Vol.-% eingestellt und durch Nachdosierung konstant gehalten bis der Polypropylendruck im Reaktor durch Abpolymerisieren des Propylens auf 6 bar gefallen war. Dann wurde durch kurzes Abgasen der Wasserstoff auf 1,0 Vol.-% reduziert und bei dieser Wasserstoffkonzentration die Polymerisation weitergeführt.

Es wurden 10 mg des Metallocens rac-Dimethylsilandiylbis (2-ethyl-4-phenyl-1-indenyl) zirkondichlorid wurden in 16 ml toluolischer Methylaluminoxanlösung (entsprechend 25 m mol Al) gelöst und in den Reaktor gegeben.

Es wurden 16,2 kg Polymerpulver entsprechend einer Metallocenaktivität von 1 62 kg PP/ g Metallocen * h erhalten. Das Polymere ist durch folgende weitere Daten gekennzeichnet:

| | |
|---|---|
| Viskositätszahl VZ: | 245 $cm^3/g$ |
| mittlere Molmasse $M_w$: | 358 000 g/mol |
| $M_w/M_n$: | 3,0 |
| Schmelzpunkt $T_m$: | 161°C |
| Schmelzflußindex MFI: | 4,6 g/10 min |
| Mittlere isotaktische Blocklänge $n_{iso}$: | ca. 100 |
| Isotaxie-Index: | ca. 98 % |

Herstellung der Folien

Beispiel 5

Es wurde durch stufenweise Orientierung in Längs- und Querrichtung eine transparente einschichtige Folie mit einer Gesamtdicke von 40 µm hergestellt. Der verwendete Rohstoff für die Folie war:

89,35 Gew.-% hochisotaktisches Polypropylen der Firma Hoechst AG
0,15 Gew.-% Stabilisator
0,20 Gew.-% Antiblockmittel mit einer mittleren Teilchengröße von 2 µm
0,30 Gew.-% Gleitmittel
10,00 Gew.-% niedrig molekularer PE-Wachs

Das Polypropylenhomopolymer wurde nach Beispiel 3 hergestellt. Die Herstellungsbedingungen in den einzelnen Verfahrensschritten waren:

| | | |
|---|---|---|
| Extrusion: | Temperaturen | 280°C |
| Längsstreckung: | Temperatur: | 120°C |
| | Längsstreckverhältnis | 4 |
| Querstreckung: | Temperatur: | 160°C |
| | Querstreckverhältnis: | 10 |
| Fixierung: | Temperatur: | 150 ° C |
| | Konvergenz: | 15 % |

Die auf diese Weise hergestellte Folie hatte die in der Tabelle aufgelisteten Eigenschaften (erste Zeile: Beispiel 5).

Beispiel 6

Es wurde durch Coextrusion und anschließender stufenweise Orientierung in Längs- und Querrichtung eine transparente siegelfähige dreischichtige Folie mit symmetrischem Aufbau mit einer Gesamtdicke von 40 µm hergestellt. Die Deckschichten hatten eine Dicke von jeweils 0,6 µm.

A-Basisschicht:

99,85 Gew.-% hochisotaktisches Polypropylen der Firma Hoechst AG
0,15 Gew.-% Antistatikum

Das Polypropylen des Basisrohstoffs wurde nach Beispiel 3 hergestellt.

B-Deckschichten:

| | |
|---|---|
| 98,77 Gew.-% | statistisches Ethylen-Propylen-Copolymeres mit einem $C_2$-Gehalt von 4,5 Gew.-% |
| 0,33 Gew.-% | Antiblockmittel mit einer mittleren Teilchengröße von 2 µm |
| 0,90 Gew.-% | Gleitmittel |

Die Herstellungsbedingungen in den einzelnen Verfahrensschritten waren:

| | | | |
|---|---|---|---|
| Extrusion: | Temperaturen | A-Schicht: | 280°C |
| | | B-Schicht: | 280°C |
| Längsstreckung: | Temperatur: | | 120°C |
| | Längssteckverhältnis | | 3,5 |
| Querstreckung: | Temperatur: | | 160°C |
| | Querstreckverhältnis: | | 10 |
| Fixierung: | Temperatur: | | 150°C |
| | Konvergenz: | | 15 % |

Die auf diese Weise hergestellte Folie hatte die in der Tabelle aufgelisteten Eigenschaften ( Beispiel 6).

Vergleichsbeispiel 1

Im Vergleich zu Beispiel 6 wurde ein herkömmliches Polypropylen der Fa. Hoechst AG genommen. Der n-heptanlösliche Anteil der Folie hatte einen mittels $^{13}$C-NMR-Spektroskopie gemessenen Kettenisotaxie-Index von 93 %. Das $M_w/M_n$ betrug 4,5 und der n-heptanlösliche Anteil betrug 4 Gew.-%.

Tabelle

| | Foliendicke | E-Modul | Reißfestigkeit | Reißdehnung | Glanz | Trübung | Migrationsverhalten gegenüber | | | |
|---|---|---|---|---|---|---|---|---|---|---|
| | | | | | | | I | II | III | IV |
| | | DIN 532 455 längs/quer | DIN 53 455 längs/quer | DIN 53 455 längs/quer | DIN 67530 | ASTM D 1003-52 | DIN EN V 1186-3 | | | |
| | μm | $N/mm^2$ | $N/mm^2$ | % | | % | $mg/m^2$ | | | |
| B5 | 40 | 2600/4700 | 160/320 | 125/70 | 140 | 1,0 | 1 | 1 | 1 | 2 |
| VB1 | 40 | 2600/4700 | 170/310 | 125/70 | 140 | 1,8 | 1 | 1 | 1 | 11 |

B = Beispiel; VB = Vergleichsbeispiel, B-Seite: Walzenseite

B'-Seite: Seite für die Corona- oder Flammbehandlung, falls diese Behandlung durchgeführt wird

I =dest. Wasser, II = 3 %ige Essigsäure, III = 15 %ige r Ethanol, IV = rektifiziertes Öl

## Patentansprüche

1. Biaxial orientierte Polypropylenfolie, welche mindestens eine Basisschicht aufweist welche Polypropylen enthält, dadurch gekennzeichnet, daß

   - die mittlere isotaktische Blocklänge des Polypropylenmoleküls zwischen zwei Kettenbaufehlern im statistischen statistischen Mittel größer als 40 ist
   - der n-heptanunlösliche Anteil des Polypropylens einen Kettenisotaxie-Index, gemessen mittels 13C-NMR-Spektroskopie, von mindestens 95 % aufweist
   - das Verhältnis von Gewichtsmittel Mw zu Zahlenmittel Mn der Molekulargewichtsverteilung kleiner als 4 ist, und
   - der n-heptanlösliche Anteil des Polypropylens kleiner als 1 % ist und
   - die Globalmigration der Folie gemessen gemäß DIN EN V 1186-3 kleiner 5 ist.

2. Polypropylenfolie nach Anspruch 1, dadurch gekennzeichnet, daß die Basisschicht ein Polypropylen enthält, dessen Mw/Mn kleiner 3,0, und insbesondere kleiner als 2,7, ist.

3. Polypropylenfolie gemäß einem oder mehreren der Ansprüche 1 bis 2, dadurch gekennzeichnet, daß sie mindestens einseitig, vorzugsweise beidseitig, eine Deckschicht aus $\alpha$-olefinischen Polymeren aufweist.

4. Polypropylenfolie gemäß einem oder mehreren der Ansprüche 1 bis 3, dadurch gekennzeichnet, daß ein- oder beidseitige Zwischenschicht/en aus $\alpha$-olefinischen Polymeren zwischen der Basis- und der/den Deckschicht/en angebracht ist/sind.

5. Polypropylenfolie gemäß einem oder mehreren der Ansprüche 1 bis 4, dadurch gekennzeichnet, daß die Basisschicht Antistatikum enthält.

6. Polypropylenfolie gemäß einem oder mehreren der Ansprüche 1 bis 5, dadurch gekennzeichnet, daß die Deckschicht/en Gleitmittel und/oder Antiblockmittel enthält/enthalten.

7. Polypropylenfolie gemäß einem oder mehreren der Ansprüche 1 bis 6, dadurch gekennzeichnet, daß die Basis- und/oder Deckschicht/en und/oder Zwischenschicht/en Neutralisationsmittel und/oder Stabilisator enthalten.

8. Polypropylenfolie gemäß einem oder mehreren der Ansprüche 1 bis 7, dadurch gekennzeichnet, daß die Zwischenschicht/en Neutralisationsmittel, Stabilisator, Antistatika und/oder Antiblockmittel enthält/enthalten.

9. Polypropylenfolie gemäß einem oder mehreren der Ansprüche 1 bis 8, daß die Deckschicht/en siegelfähig ist/sind.

10. Polypropylenfolie gemäß einem oder mehreren der Ansprüche 1 bis 9, daß die Deckschicht/en nicht siegelfähig ist/sind.

11. Polypropylenfolie gemäß einem oder mehreren der Ansprüche 1 bis 10, dadurch gekennzeichnet, daß die Dicke der Folie 4 bis 100 $\mu$m beträgt, wobei die Basisschicht etwa 40 bis 60 % der Gesamtdicke ausmacht.

12. Polypropylenfolie gemäß einem oder mehreren der Ansprüche 1 bis 11, dadurch gekennzeichnet, daß sie einschichtig ist.

13. Verfahren zur Herstellung einer Polypropylenfolie gemäß Anspruch 1, dadurch gekennzeichnet, daß die Polymeren der einzelnen Schichten in einem Extruder erwärmt, komprimiert und aufgeschmolzen werden, die den einzelnen Schichten der Folie entsprechenden Schmelzen gemeinsam und gleichzeitig durch eine Flachdüse extrudiert werden und die so erhaltene Folie auf einer Abzugswalze gezogen wird, wobei sie sich abkühlt und verfestigt und die so erhaltene Vorfolie längs und quer orientiert wird, wobei die Orientierung in Längsrichtung mit einem Längsstreckverhältnis von 3:1 bis 9:1 und in Querrichtung mit einem Querstreckverhältnis von 4:1 bis 12:1 erfolgt.

14. Verwendung der Polypropylenfolie gemäß einem oder mehreren Ansprüchen 1 bis 12 als Verpackungsfolie.

15. Verwendung der Polypropylenfolie gemäß einem oder mehreren Ansprüchen 1 bis 12 als Kaschierfolie.

Europäisches Patentamt

# EUROPÄISCHER RECHERCHENBERICHT

Nummer der Anmeldung
EP 96 10 8234

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,A | EP-A-0 627 305 (HOECHST AG) 7.Dezember 1994<br>* Ansprüche 1,7-11 * | 1-15 | B32B27/32 |
| X | EP-A-0 645 426 (HOECHST AG) 29.März 1995<br>* Ansprüche 1,5,9,10,12,15-27 * | 1-15 | |
| X | DE-A-42 28 812 (HOECHST AG) 3.März 1994<br>* Seite 2, Zeile 40 - Seite 3, Zeile 8; Ansprüche 1-4,10,12-14,16-19 *<br>* Seite 3, Zeile 29 - Seite 4, Zeile 61; Tabelle 1 *<br>* Seite 5, Zeile 3 - Seite 6, Zeile 16 * | 1-15 | |
| P,X | WO-A-95 30708 (EXXON CHEMICAL PATENTS, INC.) 16.November 1995<br>* Ansprüche 1,3,12,14 *<br>* Seite 7, Zeile 11 - Zeile 24 *<br>* Seite 8, Zeile 23 - Seite 9, Zeile 9 *<br>* Seite 10, Zeile 34 - Seite 11, Zeile 22 * | 1-15 | **RECHERCHIERTE SACHGEBIETE (Int.Cl.6)** |
| A | EP-A-0 282 917 (HOECHST AG) 21.September 1988<br>* Seite 2, Zeile 39 - Zeile 55; Ansprüche 1-5,8-11,20,23 * | 1,3-15 | B32B<br>C08J |
| A | EP-A-0 384 263 (HOECHST AG) 29.August 1990<br>* Seite 7, Zeile 50 - Zeile 58; Ansprüche 1,5 * | 1-15 | |
| A | DE-A-42 42 486 (BASF AG) 23.Juni 1994<br>* Ansprüche 1,3-5,8,9 * | 1-15 | |

Der vorliegende Recherchenbericht wurde für alle Patentansprüche erstellt

| Recherchenort | Abschlußdatum der Recherche | Prüfer |
|---|---|---|
| DEN HAAG | 25.September 1996 | Kanetakis, I |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)